(19) Europäisches Patentamt
European Patent Office
Office européen des brevets

(11) EP 0 384 195 B1

(12) **EUROPÄISCHE PATENTSCHRIFT**

(45) Veröffentlichungstag und Bekanntmachung des Hinweises auf die Patenterteilung:
**20.08.1997 Patentblatt 1997/34**

(51) Int Cl.6: **G01N 31/16**

(21) Anmeldenummer: **90102147.7**

(22) Anmeldetag: **03.02.1990**

(54) **Reagenz für die coulometrische Wasserbestimmung**

Reagent for coulometrically determining water capacity

Réactif pour la détermination coulométrique de la teneur en eau

(84) Benannte Vertragsstaaten:
**BE CH DE ES FR GB IT LI NL SE**

(30) Priorität: **18.02.1989 DE 3904992**

(43) Veröffentlichungstag der Anmeldung:
**29.08.1990 Patentblatt 1990/35**

(73) Patentinhaber: **RIEDEL-DE HAEN AKTIENGESELLSCHAFT**
**D-30926 Seelze 1 (DE)**

(72) Erfinder: **Scholz, Eugen, Dr.**
**D-3008 Garbsen (DE)**

(74) Vertreter:
**Geissler, Bernhard, Dr. jur., Dipl.-Phys. et al**
**Patent- und Rechtsanwälte**
**Bardehle . Pagenberg . Dost . Altenburg .**
**Frohwitter . Geissler & Partner**
**Postfach 86 06 20**
**81633 München (DE)**

(56) Entgegenhaltungen:
**EP-A- 0 035 066**
**EP-A- 0 036 487**
**EP-A- 0 086 994**
**EP-A- 0 135 098**
**DE-A- 3 614 135**
**US-A- 4 725 552**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 384 195 B1

Printed by Jouve, 75001 PARIS (FR)

**Beschreibung**

Die Erfindung betrifft ein Reagenz für die coulometrische Wasserbestimmung nach der Karl-Fischer-Reaktion in einer diaphragmalosen Zelle.

Ein Karl-Fischer-Reagenz enthält z.B. als reaktive Bestandteile Methanol, Schwefeldioxid, Pyridin (Py) und Iod. Der Wasserbestimmung liegt dann die sogenannte Karl-Fischer-Reaktion zugrunde:

$$CH_3OH + SO_2 + Py \rightarrow (PyH)\ SO_3CH_3$$

$$H_2O + \tau_2 + (PyH)\ SO_3CH_3 + 2Py \rightarrow$$

$$(PyH)\ SO_4CH_3 + 2(PyH) \qquad I$$

Dabei wird nach dem ersten Reaktionsschritt zunächst ein Salz der methylschwefligen Säure gebildet, das dann nach dem zweiten Reaktionsschritt unter Verbrauch einer äquivalenten Wassermenge durch Iod oxidiert wird.

Die für die Karl-Fischer-Coulometrie bestimmten Reagenzien enthalten anstelle von Iod ein Iodid. Das für die Reaktion erforderliche Iod wird bei der Karl-Fischer-Coulometrie durch anodische Oxidation des Iodids erzeugt. Aus dem Stromverbrauch für diese Oxidationsreaktion wird der Wassergehalt errechnet, d.h. die Anodenreaktion muß mit 100%iger Stromausbeute ablaufen.

Die parallel ablaufende Kathodenreaktion erzeugt jedoch Nebenprodukte, die ihrerseits wieder durch Iod oxidierbar sind und so Wasser vortäuschen. Deshalb wird die Kathodenreaktion in einem gesonderten Kathodenraum durchgeführt, der durch ein Diaphragma vom Anodenraum abgetrennt ist. Auf diesem Wege wird die Störung der Anodenreaktion durch die Produkte der Kathodenreaktion verringert.

Die Störung wird allerdings nicht vollständig beseitigt, denn die kathodischen Reaktionsprodukte diffundieren durch das Diaphragma langsam hindurch. Anionen wandern bei Anlegen des elektrischen Feldes in den Anodenraum. Beide werden im Anodenraum durch Iod oder an der Anode oxidiert und täuschen Wasser vor. Deshalb haben viele Karl-Fischer-Coulometer eine sogenannte "Drift"-Kompensation, die die Diffusion im stromlosen Zustand kompensiert. Die Ionenwanderung unter dem Einfluß des elektrischen Feldes wird dabei nicht kompensiert. Aus diesem Grunde können bei der konventionellen Karl-Fischer-Coulometrie Fehler bis zu 30% auftreten, die durch die Wanderung von oxidierbaren Anionen verursacht werden. Derartige Fehler werden jedoch bisher toleriert, weil die Karl-Fischer-Coulometrie vorwiegend für Substanzen mit geringen Wassergehalten (0,1 bis 0,0001 %) geeignet ist und im ppm-Bereich besondere Vorteile gegenüber anderen Wasserbestimmungsmethoden zeigt.

Zur Minimierung der bei der konventionellen Karl-Fischer-Coulometrie auftretenden Fehler ist es bekannt, im Anodenraum und in dem dabei durch ein Diaphragma getrennten Kathodenraum zwei verschieden zusammengesetzte Lösungen zu verwenden. Die eigentliche Karl-Fischer-Reaktion läuft im Anolyten ab, während der Katolyt eine Hilfslösung ist, die eine Kathodenreaktion ermöglicht. Die Verwendung zweier unterschiedlich zusammengesetzter Elektrolytlösungen bzw. die Verwendung einer coulometrischen Zelle mit einem Diaphragma ist jedoch umständlich.

Aufgabe der vorliegenden Erfindung ist es daher, ein Reagenz und ein Verfahren zur coulometrischen Bestimmung von Wasser nach der Karl-Fischer-Reaktion anzugeben, bei dessen Anwendung bzw. Durchführung kein Diaphragma erforderlich ist.

Das erfindungsgemäße Reagenz für die coulometrische Wasserbestimmung nach der Karl-Fischer-Reaktion besteht aus einem alkoholischen Lösungsmittel oder Lösungsmittelgemisch, in dem

Schwefeldioxid,
Imidazol und/oder ein Imidazolderivat und/oder Diethanolamin und/oder Triethanolamin,
ein oder mehrere Iodide
und ein oder mehrere Leitsalze
gelöst sind.

Im Rahmen der vorliegenden Erfindung wird unter einem alkoholischen Lösungsmittel ein ein- oder zweiwertiges Alkanol mit 1 bis 3 C-Atomen verstanden, das mit 1 bis 4 Halogenatomen und/oder 1 bis 4 Phenylestern substituiert sein kann. Die Halogenatome sind an hydroxylgruppenfreie Kohlenstoffatome des Alkanols gebunden. Die Phenylreste können ihrerseits mit Halogen, ($C_1$ bis $C_4$)-Alkyl und/oder ($C_1$ bis $C_4$)-Alkoxy mono-, di- oder trisubstituiert sein. Monosubstituierte Phenylreste sind bevorzugt. Eine Hydroxylgruppe eines zweiwertigen Alkanols kann auch mit ($C_1$ bis $C_4$)-Alkyl verethert sein.

Als Halogenatome für die Substituenten des Alkanols kommen Brom-, Iod-, Fluor- und vorzugsweise Chloratome in Betracht.

Beispiele für geeignete Alkanole sind: Methanol, Ethanol, Propanol, Ethylenglykol, Propylenglykol, 1,3-Propandiol, 2-Methoxyethanol, 2-Chlorethanol, 2-Bromethanol, 2-Iod-ethanol, 2-Fluorethanol, 2,2,2-Trifluorethanol, 1-Brompropanol(2), 2-Chlorpropanol (1), 3-Chlorpropandiol-(1,2), 2,2,3,3-Tetrafluorpropanol (1), Benzylalkohol, 2-Brombenzylalkohol, 3-Methoxybenzylalkohol, 4-Methoxybenzylalkohol, 4-Methylbenzylalkohol, 1-Phenylethanol, 2-Phenylethanol, 2-Phenoxyethanol, Benzhydrol und Tetraphenylethandiol. Die Alkanole werden einzeln oder auch im Gemisch miteinander verwendet. Gegebenenfalls werden sie im Gemisch mit einem oder mehreren anderen zusätzlichen organischen Lösemitteln eingesetzt, wobei die Menge

des Alkanols mehr als 10, vorzugsweise mindestens 25 Gewichtsprozent des Lösemittelgemisches beträgt.

Als zusätzliches Lösungsmittel sind z.B. geeignet: aliphatische Kohlenwasserstoffe mit 5 bis 10 Kohlenstoffatomen, vorzugsweise 6, 7 oder 8 Kohlenstoffatomen, oder aromatische gegebenenfalls alkylsubstituierte, vorzugsweise methylsubstituierte Kohlenwasserstoffe mit 6 bis 12 Kohlenstoffatomen, vorzugsweise 6, 7 oder 8 Kohlenstoffatomen. Beispiele hierfür sind n-Pentan, n-Hexan, 2,3-Dimethylbutan, 3-Methylhexan, Methylcyclopentan, n-Heptan, Cycloheptan, i-Octan und Dekahydronaphthalin sowie Benzol, Toluol, 1,2-Diethylenbenzol, Xylol und 1,3-Dimethylnaphthalin. Weiterhin sind geeignet: aliphatische Halogenkohlenwasserstoffe mit 1 bis 10 Kohlenstoffatomen, vorzugsweise 1 bis 7 Kohlenstoffatomen, und aromatische Halogenkohlenwasserstoffe mit 6 bis 10 Kohlenstoffatomen, vorzugsweise 6 oder 7 Kohlenstoffatomen. Beispiele hierfür sind Chloroform, Dichlormethan, Tetrachlormethan, 1,1,2,2-Tetrachlorethan, 1,1,1-Trichlorethan, 2-Brombutan, 1-Brom-3-chlorpropan, 1-Chlorhexan, 1,2-Dibrom-1,1-dichlorethan, 1,2-Dibrom-1,1-difluorethan, 1,2-Dichlorethan, 1,6-Dichlorhexan, 2,2-Dichlorpropan, 1-Fluorheptan, Pentachlorethan und Perfluorbutyliodid sowie Chlorbenzol, 3-Chlortoluol, 4-Bromchlorbenzol, 1,2-Dibrombenzol, 1,4-Difluorbenzol und 3-Brombenzotrifluorid.

Der Zusatz eines zusätzlichen Lösungsmittels dient vorwiegend dazu, das Löseverhalten bestimmter zu untersuchender Proben (Fette, Öle und dergleichen) im erfindungsgemäßen Reagenz zu verbessern.

In einem Liter des erfindungsgemäßen Reagenzes sind normalerweise 0,05 bis 5 mol, vorzugsweise 0,1 bis 2 mol, Schwefeldioxid gelöst.

Als reaktive Base für die Karl-Fischer-Reaktion enthält das erfindungsgemäße Reagenz Imidazol oder ein Imidazolderivat, Diethanolamin oder Triethanolamin. Diese Basen können einzeln oder auch im Gemisch enthalten sein.

Als Imidazolderivat wird vorzugsweise eine Verbindung der Formel

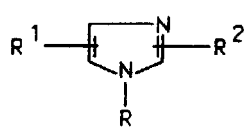

verwendet, in der R, $R^1$ und $R^2$ gleich oder verschieden sind und jeweils ein Wasserstoffatom, einen niederen, vorzugsweise 1 bis 4 Kohlenstoffatome aufweisenden Alkylrest oder einen Phenylrest bedeuten, oder $R^1$ und $R^2$ zusammen auch einen ankondensierten Benzolkern darstellen und R die genannte Bedeutung besitzt.

Beispiele für erfindungsgemäß verwendete Imidazolderivate sind 1-Methylimidazol, 1-Ethylimidazol, 1-Propylimidazol, 1-Butylimidazol, 2-Methylimidazol, 2-Ethylimidazol, 2-Propylimidazol, 2-Butylimidazol, 4-Methylimidazol, 4-Butylimidazol, 1,2-Dimethylimidazol, 1,2,4-Trimethylimidazol, 1-Phenylimidazol, 2-Phenylimidazol und Benzimidazol.

Die Anwendungskonzentrationen im erfindungsgemäßen Reagenz liegen bei Imidazol und den Imidazolderivaten zwischen 0,2 mol/l und 4 mol/l, bei Diethanolamin und Triethanolamin zwischen 0,1 mol/l und 2 mol/l.

Das erfindungsgemäße Reagenz enthält außerdem mindestens ein lösliches Iodid, das anodisch zu Iod oxidiert werden kann und so den Ablauf der Karl-Fischer-Reaktion sicherstellt. Als lösliche Iodide können Alkali- oder Erdalkali-iodide, wie z.B. Natriumiodid, Kaliumiodid, Lithium-iodid, Calciumiodid verwendet werden. Geeignet sind auch Hydroiodide von organischen Basen, z.B. von Trimethylamin oder Triethylamin.

Bevorzugt verwendet werden die Hydroiodide der reaktiven Basen, die im erfindungsgemäßen Reagenz benutzt werden, also z.B. Imidazolhydroiodid, 1-Alkylimidazolhydroiodid, 2-Alkylimidazolhydroiodid, Diethanolaminhydroiodid oder Triethanolaminhydroiodid. Das erfindungsgemäße Reagenz enthält ein Iodid oder ein Gemisch verschiedener Iodide. Die Iodidkonzentration im erfindungsgemäßen Reagenz liegt zwischen 0,02 mol/l und 1 mol/l. Die Iodide können bei der Herstellung des Reagenzes als Salze direkt zugesetzt werden oder auch durch Umsetzen von Iod mit Wasser im fertig formulierten Reagenz hergestellt werden.

Das erfindungsgemäße Reagenz enthält zur Verbesserung seines Leitungsvermögens ein oder mehrere zusätzliche Leitsalze. Die Anionen dieser Leitsalze können sich von anorganischen Säuren, wie z.B. Halogenwasserstoffen, Schwefelsäure, schwefliger Säure, oder von organischen Säuren, wie z.B. Benzoe- und Salicylsäure, ableiten. Auch die Kationen der Leitsalze können anorganischer oder organischer Natur sein. Anorganische Kationen sind z.B. die Kationen der Alkalimetalle, insbesondere des Lithiums, Natriums, Kaliums, Cäsiums und der Erdalkalimetalle, insbesondere des Calciums und Bariums. Geeignet sind Halogenide wie Natriumbromid, Natriumiodid, Kaliumbromid, Kaliumiodid, Cäsiumchlorid, Tetrabutylbromid, Calciumiodid, Bariumbromid, Lithiumbenzoat oder Natriumsalicylat. Bevorzugt verwendet werden Salze, deren Kationen oder Anionen im erfindungsgemäßen Reagenz enthalten sind, z.B. Imidazolhydrobromid, 1-Methylimidazolhydrochlorid, Diethanolaminhydrochlorid, Diethanolammoniumbenzoat, Imidazoliniumsalicylate, Triethanolammoniummethylsulfit, Imidazoliniummethylsulfit. Salze der Alkylester der schwefligen Säure, die sich aus Schwefeldioxid und dem verwendeten Alkohol bilden, sind ebenso geeignet wie die Iodide der verwendeten reaktiven Basen. Auch Reaktionsprodukte der Karl-Fischer-Reaktion, wie z.B. die Alkylsulfate der enthaltenen Basen sind als Leitsalze verwendbar. Die Leitsalze können dem Reagenz bei der Herstellung zugesetzt aber auch durch Umsetzung der Reaktionspartner während der Herstellung erzeugt werden, z B.

die Alkylsulfite durch Umsetzung von Alkohol, Schwefeldioxid und der entsprechenden Base oder die Alkylsulfate durch Oxidation der Alkylsulfite durch Iod in Gegenwart von Wasser.

Im Normalfall enthält das erfindungsgemäße Reagenz soviel Leitsalz, daß die elektrische Leitfähigkeit des Reagenzes bei 20°C mindestens 5 mS/cm, vorzugsweise 10 bis 30 mS/cm, beträgt.

In manchen Fällen können die Iodide auch die Funktion eines Leitsalzes übernehmen. Normalerweise wird jedoch ein Leitsalz verwendet, das kein Iodid darstellt. Vorzugsweise werden Bromide als Leitsalze verwendet, insbesondere ein Hydrobromid der im Reagenz vorhandenen reaktiven Basen, also ein Hydrobromid des Imidazols, eines Imidazolderivats, des Diethanolamins oder des Triethanolamins.

Das erfindungsgemäße Reagenz wird durch Auflösen der Komponenten in dem alkoholischen Lösungsmittel oder Lösungsmittelgemisch, gegebenenfalls unter Kühlung auf eine Temperatur von 15 bis 50°C, vorzugsweise auf eine Temperatur von 20 bis 40°C, hergestellt. Normalerweise wird in dem alkoholischen Lösungsmittel oder Lösungsmittelgemisch zuerst 0,2 bis 4 mol/l Imidazol und/oder Imidazolderivat oder 0,1 bis 2 mol/l Diethanolamin oder Triethanolamin aufgelöst und Schwefeldioxid wird z.B. in einer Menge von 0,05 bis 5 mol/l, vorzugsweise 0,1 bis 2 mol/l, eingeleitet. Das erforderliche Iodid wird entweder als solches zugefügt, oder es wird Iod und später Wasser bis zur Entfärbung zugesetzt, wodurch sich das Iodid bildet. Zur Einstellung der Leitfähigkeit wird ein Leitsalz zugesetzt.

Das Reagenz wird zur coulometrischen Wasserbestimmung von festen oder flüssigen Substanzen nach der Karl-Fischer-Reaktion in einer diaphragmalosen Zelle verwendet.

Substanzen, deren Wassergehalte bestimmt werden können, sind z.B. Fette, Öle, organische Lösungsmittel, pharmazeutische Präparate etc.

Das erfindungsgemäße Reagenz wird in die diaphragmalose coulometrische Zelle so hoch eingefüllt, daß die Anode und Kathode sowie die Indikatorelektrode vollständig bedeckt sind. Die Kathode kann von einem Draht aus Platin gebildet sein, der in einigem Abstand von einem als Anode dienenden Platindrahtnetz angebracht ist. Die eigentliche coulometrische Wasserbestimmung wird unter Verwendung des erfindungsgemäßen Reagenzes in an sich bekannter Weise durchgeführt.

Die bequem zu handhabenden erfindungsgemäßen Reagenzien ermöglichen die Karl-Fischer-Coulometrie in einer Zelle, die keinen abgetrennten Kathodenraum hat. Dadurch werden die Störungen, die durch das Nachdiffundieren von oxidierbaren Bestandteilen aus dem Kathodenraum in den Anodenraum verursacht werden, vollständig ausgeschaltet.

Beispiel 1:

102 g Imidazol (1,5 mol) werden in 900 ml Methanol gelöst. Unter Kühlung werden 45 g Schwefeldioxid (0,7 mol) eingeleitet. Dann werden 12,7 g Iod (0,1 mol) zugesetzt. Der Ansatz wird mit Methanol auf 1 l aufgefüllt. Dann wird das Iod durch tropfenweisen Zusatz von Wasser reduziert, bis die Farbe der Lösung nach schwach gelb umschlägt. Dabei entstehen Imidazolhydroiodid und Imidazolmethylsulfat als Leitsalze. Die elektrische Leitfähigkeit bei 20°C beträgt 28 $mScm^{-1}$.

Beispiel 2:

66 g Methylimidazol (0,8 mol) werden in 900 ml 2-Chlorethanol gelöst. Dann werden unter Kühlung 26 g Schwefeldioxid (0,4 mol) eingeleitet. Anschließend werden 42 g 2-Methylimidazolhydrojodid (0,2 mol) und 98 g 2-Methylimidazolhydrobromid (0,6 mol) zugesetzt. Der Ansatz wird mit 2-Chlorethanol auf ein Gesamtvolumen von 1 l aufgefüllt und durch Zusatz von etwa 0,5 g Iod entwässert.

Beispiel 3:

42 g Diethanolamin (0,4 mol) werden in 800 ml Methanol gelöst. Dann werden 26 g Schwefeldioxid (0,4 mol) eingeleitet. Dieser Lösung werden 47 g Diethanolaminhydroiodid (= 0,2 mol) und 59,5 g Imidazolhydrobromid (= 0,4 mol) zugesetzt. Der Ansatz wird mit Methanol auf 1 l aufgefüllt. Die elektrische Leitfähigkeit bei 20°C beträgt 28 $mScm^{-1}$.

Beispiel 4:

116 g Diethanolamin (1,1 mol), 14 g Imidazol (0,2 mol) und 59 g Imidazolhydroiodid (0,3 mol) werden in 800 ml Methanol gelöst. Dann werden unter Kühlung 65 g Schwefeldioxid (1 mol) eingeleitet. Zum Schluß werden 25,4 g Iod (0,2 mol) zugesetzt. Der Ansatz wird mit Methanol auf 1 l aufgefüllt und durch tropfenweisen Zusatz von Wasser entfärbt. Die elektrische Leitfähigkeit bei 20°C beträgt 28 $mScm^{-1}$.

Beispiel 5:

105 g Diethanolamin (1 mol), 163 g Diethanolaminhydroiodid (0,7 mol) und 41 g Salicylsäure (0,3 mol) werden in 600 ml Methanol und 300 ml Chloroform gelöst. Dann werden unter Kühlung 51 g Schwefeldioxid (=0,8 mol) eingeleitet. Der Ansat zu wird mit Methanol auf 1 l aufgefüllt. Die elektrische Leitfähigkeit bei 20°C beträgt 11 $mScm^{-1}$.

Beispiel 6:

126 g Diethanolamin (1,2 mol), 12,7 g Iod (0,1 mol) und 74 g Imidazolhydrobromid (0,5 mol) und 80,5 g Tetrabutylammoniumbromid (0,25 mol) werden in 500 ml Methanol und 200 ml Toluol gelöst. Dann werden 64 g Schwefeldioxid (1,0 mol) eingeleitet. Der Ansatz wird mit Methanol auf 1 l aufgefüllt und durch tropfenweisen Zusatz von Wasser entfärbt. Die elektrische Leitfähigkeit bei 20°C beträgt 17 $mScm^{-1}$.

Beispiel 7:

Ein handelsübliches KF-Coulometer ®Metrohm 652 der Fa. Metrohm AG, Herisau, Schweiz, wird mit einer Zelle ohne Diaphragma ausgerüstet. Die Zelle wird mit dem Reagenz nach Beispiel 1 gefüllt. Zur Befreiung der Zelle und des Zelleninhalts von eingeschlepptem Wasser durch automatische Vorkonditionierung wird das Gerät eingeschaltet. Nach der Vorkonditionierung wird die Bestimmung gestartet und eine Probe von 1,00 ml 1-Propanol mit einer Injektionsspritze in die Zelle injiziert. Nach etwa 3 min. zeigt das Gerät einen Wassergehalt von 0,0633 % an. Tatsächlicher Wassergehalt 0,0630 %.

**Patentansprüche**

**Patentansprüche für folgende Vertragsstaaten : DE, FR, IT, BE, NL, GB, SE, CH**

1. Reagenz für die coulometrische Wasserbestimmung in einer diaphragmalosen Zelle, bestehend aus einem alkoholischen Lösungsmittel oder Lösungsmittelgemisch, in dem Imidazol und/oder ein Imidazolderivat und/oder Diethanolamin und/oder Triethanolamin und Schwefeldioxid und ein Iodid oder mehrere Iodide und ein Leitsalz oder mehrere Leitsalze gelöst sind.

2. Reagenz nach Anspruch 1, dadurch gekennzeichnet, daß es 0,2 bis 4 mol/l Imidazol und/oder Imidazolderivat und/oder 0,1 bis 2 mol/l Diethanolamin und/oder Triethanolamin enthält.

3. Reagenz nach Anspruch 1 und/oder 2, dadurch gekennzeichnet, daß es 0,05 bis 5 mol/l, vorzugsweise 0,1 bis 2 mol/l, Schwefeldioxid enthält.

4. Reagenz nach einem oder mehreren der Ansprüche 1 bis 3, dadurch gekennzeichnet, daß es 0,02 bis 1 mol/l eines Iodids oder mehrerer Iodide enthält.

5. Reagenz nach einem oder mehreren der Ansprüche 1 bis 4, dadurch gekennzeichnet, daß es soviel eines Leitsalzes oder mehrerer Leitsalze enthält, daß die elektrische Leitfähigkeit mindestens 5 m Siemens/cm bei 20°C beträgt.

6. Reagenz nach einem oder mehreren der Ansprüche 1 bis 5, dadurch gekennzeichnet, daß es soviel eines Leitsalzes oder mehrere Leitsalze enthält, daß die elektrische Leitfähigkeit 10 bis 30 m Siemens/cm bei 20°C beträgt.

7. Reagenz nach einem oder mehreren der Ansprüche 1 bis 6, dadurch gekennzeichnet, daß es als Leitsalz Imidazolhydrobromid, das Hydrobromid eines Imidazolderivats, Diethanolaminhydrobromid oder Triethanolaminhydrobromid enthält.

8. Verwendung eines Reagenzes nach einem oder mehreren der Ansprüche 1 bis 7 zur coulometrischen Wasserbestimmung nach der Karl-Fischer-Reaktion in einer diaphragmalosen Zelle.

9. Verfahren zur coulometrischen Wasserbestimmung nach der Karl-Fischer-Reaktion in einer diaphragmalosen Zelle, dadurch gekennzeichnet, daß ein Reagenz gemäß einem oder mehreren der Ansprüche 1 bis 7 verwendet wird.

**Patentansprüche für folgenden Vertragsstaat : ES**

1. Verfahren zur Herstellung eines Reagenzes für die coulometrische Wasserbestimmung in einer diaphragmalosen Zelle, dadurch gekennzeichnet daß man Imidazol und/oder ein Imidazolderivat und/ oder Diethanolamin und/oder Triethanolamin und Schwefeldioxid und ein Iodid oder mehrere Iodide und ein Leitsalz oder mehrere Leitsalze in einem alkoholischen Lösungsmittel oder Lösungsmittelgemisch, gegebenenfalls unter Kühlung auf eine Temperatur von 15 bis 50°C auflöst.

2. Verfahren nach Anspruch 1, dadurch gekennzeichnet, daß man 0,2 bis 4 mol/l Imidazol und/oder Imidazolderivat und/oder 0,1 bis 2 mol/l Diethanolamin und/oder Triethanolamin auflöst.

3. Verfahren nach Anspruch 1 und/oder 2, dadurch gekennzeichnet, daß man 0,05 bis 5 mol/l, vorzugsweise 0,1 bis 2 mol/l, Schwefeldioxid auflöst.

4. Verfahren nach einem oder mehreren der Ansprüche 1 bis 3, dadurch gekennzeichnet, daß man 0,02 bis 1 mol/l eines Iodids oder mehrerer Iodide auflöst.

5. Verfahren nach einem oder mehreren der Ansprüche 1 bis 4, dadurch gekennzeichnet, daß man soviel eines Leitsalzes oder mehrerer Leitsalze auflöst, daß die elektrische Leitfähigkeit des Reagenzes mindestens 5 m Siemens/cm bei 20°C beträgt.

6. Verfahren nach einem oder mehreren der Ansprüche 1 bis 5, dadurch gekennzeichnet, daß man soviel eines Leitsalzes oder mehrerer Leitsalze auflöst, daß die elektrische Leitfähigkeit des Reagenzes 10 bis 30 m Siemens/cm bei 20°C beträgt.

**7.** Verfahren nach einem oder mehreren der Ansprüche 1 bis 6, dadurch gekennzeichnet, daß man als Leitsalz Imidazolhydrobromid, das Hydrobromid eines Imidazolderivats, Diethanolaminhydrobromid oder Triethanolaminhydrobromid enthält.

**8.** Verwendung eines nach einem oder mehreren der Ansprüche 1 bis 7 hergestellten Reagenzes zur coulometrischen Wasserbestimmung nach der Karl-Fischer-Reaktion in einer diaphragmalosen Zelle.

**9.** Verfahren zur coulometrischen Wasserbestimmung nach der Karl-Fischer-Reaktion in einer diaphragmalosen Zelle, dadurch gekennzeichnet, daß ein Reagenz verwendet wird, das nach einem Verfahren einer oder mehrerer der Ansprüche 1 bis 7 hergestellt worden ist.

**Revendications**

**Revendications pour les Etats contractants suivants : DE, FR, IT, BE, NL, GB, SE, CH**

**1.** Réactif pour le dosage coulométrique de l'eau dans une cellule sans diaphragme, constitué d'un solvant ou d'un mélange de solvants alcooliques, dans lequel sont dissous de l'imidazole et/ou un dérivé de l'imidazole et/ou de la diéthanolamine et/ou de la triéthanolamine et du dioxyde de soufre et un iodure ou plusieurs iodures, et un sel conducteur ou plusieurs sels conducteurs.

**2.** Réactif selon la revendication 1, caractérisé en ce qu'il contient de 0,2 à 4 mol/l d'imidazole et/ou d'un dérivé de l'imidazole et/ou de 0,1 à 2 mol/l de diéthanolamine et/ou de triéthanolamine.

**3.** Réactif selon les revendications 1 et/ou 2, caractérisé en ce qu'il contient de 0,05 à 5 mol/l, de préférence de 0,1 à 2 mol/l, de dioxyde de soufre.

**4.** Réactif selon l'une ou plusieurs des revendications 1 à 3, caractérisé en ce qu'il contient de 0,02 à 1 mol/l d'un iodure ou de plusieurs iodures.

**5.** Réactif selon l'une ou plusieurs des revendications 1 à 4, caractérisé en ce qu'il contient suffisamment d'un sel conducteur ou de plusieurs sels conducteurs pour que la conductivité électrique soit d'au moins 5 m Siemens/cm à 20°C.

**6.** Réactif selon l'une ou plusieurs des revendications 1 à 5, caractérisé en ce qu'il contient suffisamment d'un sel conducteur ou de plusieurs sels conducteurs pour que la conductivité électrique soit de 10 à 30 m Siemens/ cm à 20°C.

**7.** Réactif selon l'une ou plusieurs des revendications 1 à 6, caractérisé en ce qu'il contient en tant que sel conducteur du bromhydrate d'imidazole, le bromhydrate d'un dérivé de l'imidazole, le bromhydrate de diéthanolamine ou le bromhydrate de triéthanolamine.

**8.** Utilisation d'un réactif selon l'une ou plusieurs des revendications 1 à 7 pour le dosage coulométrique de l'eau par la réaction de Karl Fischer dans une cellule sans diaphragme.

**9.** Procédé pour le dosage coulométrique de l'eau par la réaction de Karl Fischer dans une cellule sans diaphragme, caractérisé en ce qu'on utilise un réactif selon l'une ou plusieurs des revendications 1 à 7.

**Revendications pour l'Etat contractant suivant : ES**

**1.** Procédé pour préparer un réactif pour le dosage coulométrique de l'eau dans une cellule sans diaphragme, caractérisé en ce qu'on dissout de l'imidazole et/ou un dérivé de l'imidazole et/ou de la diéthanolamine et/ou de la triéthanolamine et du dioxyde de soufre et un iodure ou plusieurs iodures et un sel conducteur ou plusieurs sels conducteurs dans un solvant ou un mélange de solvants alcooliques, éventuellement en refroidissant à une température de 15 à 50°C.

**2.** Procédé selon la revendication 1, caractérisé en ce qu'on dissout de 0,2 à 4 mol/l d'imidazole et/ou d'un dérivé de l'imidazole et/ou de 0,1 à 2 mol/l de diéthanolamine et/ou de triéthanolamine.

**3.** Procédé selon les revendications 1 et/ou 2, caractérisé en ce qu'on dissout de 0,05 à 5 mol/l, de préférence de 0,1 à 2 mol/l, de dioxyde de soufre.

**4.** Procédé selon l'une ou plusieurs des revendications 1 à 3, caractérisé en ce qu'on dissout de 0,02 à 1 mol/l d'un iodure ou de plusieurs iodures.

**5.** Procédé selon l'une ou plusieurs des revendications 1 à 4, caractérisé en ce qu'on dissout suffisamment d'un sel conducteur ou de plusieurs sels conducteurs pour que la conductivité électrique du réactif soit d'au moins 5 m Siemens/cm à 20°C.

**6.** Procédé selon l'une ou plusieurs des revendications 1 à 5, caractérisé en ce qu'on dissout suffisamment d'un sel conducteur ou de plusieurs sels conducteurs pour que la conductivité électrique du réactif soit de 10 à 30 m Siemens/cm à 20°C.

**7.** Procédé selon l'une ou plusieurs des revendications 1 à 6, caractérisé en ce qu'on dissout en tant que sel conducteur du bromhydrate d'imidazole, le bromhydrate d'un dérivé de l'imidazole, du bromhydrate de diéthanolamine ou du bromhydrate de triéthanolamine.

**8.** Utilisation d'un réactif préparé selon l'une ou plusieurs des revendications 1 à 7 pour le dosage coulométrique de l'eau par la réaction de Karl Fischer dans une cellule sans diaphragme.

**9.** Procédé de dosage coulométrique de l'eau par la réaction de Karl Fischer dans une cellule sans diaphragme, caractérisé en ce qu'on utilise un réactif qui a été préparé par un procédé selon l'une ou plusieurs des revendications 1 à 7.

**Claims**

**Claims for the following Contracting States : DE, FR, IT, BE, NL, GB, SE, CH**

**1.** A reagent for the coulometric determination of water in a membrane-free cell, consisting of an alcoholic solvent or a solvent mixture, in which imidazole and/or an imidazole derivative and/or diethanolamine and/or triethanolamine and one or more iodides and one or more conducting salts are dissolved.

**2.** A reagent according to claim 1, characterized in that it comprises 0.2 to 4 mol/l imidazole and/or imidazole derivative and/or 0.1 to 2 mol/l diethanolamine and/or triethanolamine.

**3.** A reagent according to claim 1 and/or 2, characterized in that it comprises 0.05 to 5 mol/l, preferably 0.1 to 2 mol/l sulfur dioxide.

**4.** A reagent according to one or more of claims 1 to 3, characterized in that it comprises 0.02 to 1 mol/l of one or more iodides.

**5.** A reagent according one or more of claims 1 to 4, characterized in that it comprises such an amount of one or more conducting salts for its electrical conductivity to be 5 mSiemens/cm at 20°C.

**6.** A reagent according to one or more of claims 1 to 5, characterized in that it comprises such an amount of one or more conducting salts for its electric conductivity to be 10 to 30 mSiemens/cm at 20°C.

**7.** A reagent according to one or more of claims 1 to 6, characterized in that it comprises imidazole hydrobromide, the hydrobromide of an imidazole derivative, diethanolamine hydrobromide or triethanolamine hydrobromide as the conducting salt.

**8.** Use of a reagent according to one or more of claims 1 to 7 for the coulometric determination of water by the Karl-Fischer-reaction in a membrane-free cell.

**9.** A process for the coulometric determination of water by the Karl-Fischer-reaction in a membrane-free cell, characterized in that a reagent according to one or more of claims 1 to 7 is used.

**Claims for the following Contracting State : ES**

**1.** Process of the preparation of a reagent for the coulometric determination of water in a membrane-free cell, consisting of an alcoholic solvent or a solvent mixture, in which imidazole and/or an imidazole derivative and/or diethanolamine and/or triethanolamine and one or more iodides and one or more conducting salts are dissolved.

**2.** Process of the preparation of a reagent according to claim 1, characterized in that it comprises 0.2 to 4 mol/l imidazole and/or imidazole derivative and/or 0.1 to 2 mol/l diethanolamine and/or triethanolamine.

**3.** Process of the preparation of a reagent according to claim 1 and/or 2, characterized in that it comprises 0.05 to 5 mol/l, preferably 0.1 to 2 mol/l sulfur dioxide.

**4.** Process of the preparation of a reagent according to one or more of claims 1 to 3, characterized in that it comprises 0.02 to 1 mol/l of one or more iodides.

**5.** Process of the preparation of a reagent according one or more of claims 1 to 4, characterized in that it comprises such an amount of one or more conducting salts for its electrical conductivity to be 5 mSiemens/cm at 20°C.

**6.** Process of the preparation of a reagent according to one or more of claims 1 to 5, characterized in that it comprises such an amount of one or more conducting salts for its electric conductivity to be 10 to 30 mSiemens/cm at 20°C.

**7.** Process of the preparation of a reagent according to one or more of claims 1 to 6, characterized in that it comprises imidazole hydrobromide, the hydrobromide of an imidazole derivative, diethanolamine hydrobromide or triethanolamine hydrobromide as the

conducting salt.

**8.** Use of a reagent as prepared by a process according to one or more of claims 1 to 7 for the coulometric determination of water by the Karl-Fischer-reaction in a membrane-free cell.

**9.** A process for the coulometric determination of water by the Karl-Fischer-reaction in a membrane-free cell, characterized in that a reagent according to one or more of claims 1 to 7 is used.